# EUROPEAN PATENT APPLICATION

(11) **EP 4 776 211 A1**
(43) Date of publication of application: **15.07.2026**
(21) Application number: 24894483.7
(22) Date of filing: 08.11.2024
(51) Int. Cl.: G06Q 30/02, G09F 9/30, G06F 3/01, G06F 16/955

(54) **HYPER-TARGETING ADVERTISING PLATFORM DEVICE**

(30) Priority: 24.11.2023 KR 20230166144
(71) Applicant: Ilion Co., Ltd., Goyang city Gyeonggi-do 10442 (KR)
(72) Inventor: SHIN, Kyoung Min, Yangpyeong-gun Gyeonggi-do 12548 (KR); CHOI, Seung, Seongnam-si Gyeonggi-do 13423 (KR)
(74) Representative: Louis Pöhlau Lohrentz
(86) International application number: PCT/KR2024/017702
(87) International publication number: WO 2025/110590

(57) **Abstract**

The present invention relates to a hypertargeting advertising platform device that selects and efficiently delivers advertising content for a specific product to a user having a purchase intent for the product, in accordance with user profile information of the user. The hypertargeting advertising platform device comprises: a display unit on which advertising content is displayed; a product display unit positioned adjacent to the display unit and having an area for exhibiting products; a touch recognition unit disposed on a front face of the product display unit and configured to recognize a touch position of a user; a user recognition unit configured to recognize characteristics of the user; a communication unit configured to communicate with a server and receive the advertising content from the server; and a terminal control unit configured to generate user profile information from information regarding the characteristics of the user received from the user recognition unit, and to cause an advertisement for a product corresponding to the touch position received from the touch recognition unit to be selected in accordance with the user profile information and displayed on the display unit.

## Description

### TECHNICAL FIELD

The present invention relates to a hypertargeting advertising platform device, and more particularly, to a hypertargeting advertising platform device that selects and efficiently delivers advertising content for a specific product to a user having a purchase intent for the product, in accordance with the user's profile.

### BACKGROUND ART

Conventional advertising media such as print media and television commercials are gradually losing their effectiveness in that they fail to capture consumer attention, and hypertargeting advertising has been attracting considerable interest as an alternative. Hypertargeting refers to a highly focused target audience, and hypertargeting advertising generally refers to the practice of businesses concentrating their marketing and advertising efforts on more specific audiences by referencing individuals' social media profiles, activities, and networks. In other words, hypertargeting advertising builds data based on consumers' online information and behaviors, and delivers personalized advertisements to individual consumers based on that data. Hypertargeting advertising is highly effective because it increases the likelihood that advertisements will be exposed to the target consumers the business intends to reach.

Meanwhile, even if a product is one that a user is interested in, the user may not have a purchase intent at a given moment. While advertising can stimulate purchasing psychology even when there is no current purchase intent and induce users to purchase a product, the effect of advertising will be less than when there is purchase intent. In online shopping malls, when a user engages in the activity of searching for a specific product, it is determined that the user currently has a purchase intent, and a personalized advertisement can be selected and provided to the user according to the user's profile information. However, in offline stores, it is difficult to combine the point in time when there is purchase intent with the user's profile information. The fact that a user has visited an offline store confirms that the user currently has a purchase intent. However, there is a need for a method that can immediately acquire the user's profile information at the store, select the most suitable advertisement for the user from among multiple types of advertisements for the relevant product, and efficiently deliver it to the user.

The fact that a user has visited an offline store indicates a higher level of purchase intent than briefly searching for a product in an online shopping mall. Advertisements delivered to users with such a high level of purchase intent are perceived as helpful information that assists the user's decision-making; therefore, psychological resistance to the advertisements is low, and the advertisements are likely to be perceived very favorably by the user.

### SUMMARY OF THE INVENTION

Accordingly, it is an object of the present invention to select and efficiently deliver advertising content for a specific product to a user having a purchase intent for the product, in accordance with user profile information of the user.

It is another object of the present invention to provide advertising content optimized for a user with respect to a specific product by combining the user's purchase intent, profile information, and location.

It is yet another object of the present invention to enable quantitative measurement of the effectiveness of advertising carried out in offline stores.

To achieve the foregoing objects, the present invention provides a hypertargeting advertising platform device comprising: a display unit on which advertising content is displayed; a product display unit positioned adjacent to the display unit and having an area for exhibiting products; a touch recognition unit disposed on a front face of the product display unit and configured to recognize a touch position of a user; a user recognition unit configured to recognize characteristics of the user; a communication unit configured to communicate with a server and receive the advertising content from the server; and a terminal control unit configured to generate user profile information from information regarding the characteristics of the user received from the user recognition unit, and to cause an advertisement for a product corresponding to the touch position received from the touch recognition unit to be selected in accordance with the user profile information and displayed on the display unit.

The touch recognition unit may comprise: a transmission module configured to transmit a touch measurement signal; a reception module configured to receive the touch measurement signal transmitted from the transmission module; and a position determination module configured to calculate the touch position of the user using the touch measurement signal received at the reception module.

The touch recognition unit may recognize at least one of a touch duration and a touch sequence together with the touch position of the user.

The user recognition unit may recognize at least one of the gender and age group of the user. The hypertargeting advertising platform device may further comprise a location recognition unit configured to generate information regarding an installed location, and the control unit may generate user profile information based on at least one of the gender, age group, and location of the user, and cause an advertisement for the product corresponding to the touch position to be selected in accordance with the user profile information and displayed on the display unit.

The hypertargeting advertising platform device may further comprise a storage unit configured to store advertising content for the products exhibited in the product display unit, and the control unit may request the advertising content from the server via the communication unit when it is confirmed that advertising content corresponding to the user profile information is not present in the storage unit.

The control unit may cause Internet address information associated with the product corresponding to the touch position to be displayed on the display unit, so that user feedback information regarding the product corresponding to the touch position is provided to the server. The Internet address information may be displayed on the display unit as a QR code, and the user may provide user feedback information regarding the product corresponding to the touch position to the server by capturing the QR code with a smartphone.

The hypertargeting advertising platform device may further comprise a storage unit configured to store advertising content for the products exhibited in the product display unit, and the control unit may receive the advertising content from the server via the communication unit at a preset time and store it in the storage unit.

### BRIEF DESCRIPTION OF THE DRAWINGS

FIG. 1 is a network configuration diagram of a hypertargeting advertising platform device according to an embodiment of the present invention.
FIG. 2 is a diagram illustrating the flow of information for providing user feedback in the network configuration shown in FIG. 1.
FIG. 3 is a diagram illustrating the operation of a hypertargeting advertising platform device according to an embodiment of the present invention.
FIG. 4 illustrates a method of detecting X-axis coordinates and Y-axis coordinates in the touch recognition unit shown in FIG. 1 in order to sense the hand of a user.

### DETAILED DESCRIPTION OF THE PREFERRED EMBODIMENTS

In order to fully understand the present invention, preferred embodiments of the present invention will be described with reference to the accompanying drawings. The embodiments of the present invention may be modified in various forms, and the scope of the present invention should not be construed as being limited to the embodiments described in detail below. The present embodiments are provided to more completely describe the present invention to those having ordinary skill in the art. Therefore, the shapes of elements in the drawings may be exaggerated for clarity of description. It should be noted that the same elements in the drawings may be denoted by the same reference numerals. Detailed descriptions of known functions and configurations that are determined to unnecessarily obscure the gist of the present invention are omitted.

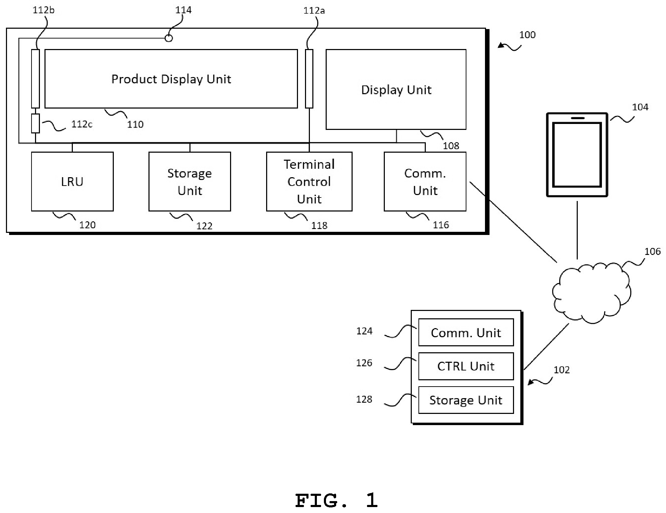

FIG. 1 is a network configuration diagram of a hypertargeting advertising platform device 100 according to an embodiment of the present invention. As illustrated, a hypertargeting advertising platform device 100, a service server 102, and a user terminal 104 are connected to a network 106 such as the Internet.

The hypertargeting advertising platform device 100 comprises a display unit 108, a product display unit 110, touch recognition units 112a, 112b, 112c, a user recognition unit 114, a communication unit 116, and a terminal control unit 118.

The display unit 108 displays advertising content for the products exhibited in the product display unit 110. The display unit 108 is configured to express advertising content in various formats.

The product display unit 110 is positioned adjacent to the display unit 108 and may be freely installed on the top, bottom, left, or right side of the display unit 108, and has an area for exhibiting one or more products. The product display unit 110 may be divided into a plurality of areas to facilitate recognition of touch positions by the user. The user may touch the products exhibited in the product display unit 110.

The touch recognition units 112a, 112b, 112c are disposed on the front face of the product display unit 110 to form a touch sensing area, thereby recognizing the touch position of the user. The touch recognition unit may comprise a transmission module 112a configured to transmit a touch measurement signal, a reception module 112b configured to receive the touch measurement signal transmitted from the transmission module 112a, and a position determination module 112c configured to calculate the touch position of the user using the touch measurement signal received at the reception module. The position determination module 112c may recognize at least one of a touch duration and a touch sequence together with the touch position of the user to generate touch information.

The user recognition unit 114 recognizes characteristics of the user. In the present embodiment, the user recognition unit 114 may be implemented as an image generating device such as a camera, and may analyze an image of the user captured by the camera to estimate the user's gender, age group, and the like. The user recognition unit 114 may be implemented as an ultrasonic sensor, an infrared sensor, or the like to detect the approach of the user. When the user recognition unit 114 detects the approach of the user, the terminal control unit 118 may control the display unit 108 to display preset advertising content.

The hypertargeting advertising platform device 100 may further comprise a location recognition unit 120 configured to generate information regarding the installed location. The location recognition unit 120 may obtain location information through the use of technologies such as GPS or Wi-Fi, or through manual input of location information by the installer. Based on this location information, the hypertargeting advertising platform device 100 may provide advertisements or messages suited to a specific area or situation. Even for advertisements for the same product, a customized message may be provided according to the location information. Furthermore, region-specific advertisements or messages may be provided.

The communication unit 116 communicates with the service server 102 via the network 106. The communication unit 116 receives advertising content to be displayed on the display unit 108 from the service server 102. In addition, user response data may be collected by the service server 102 via the communication unit 116. The service server 102 may analyze the user response data and, if necessary, update new advertising content in the storage unit 122 or cause it to be displayed on the display unit 108.

When the user touches a specific product from among the products exhibited in the product display unit 110, detailed information or an advertisement for the relevant product is displayed on the display unit 108.

The terminal control unit 118 generates user profile information from the information regarding the characteristics of the user received from the user recognition unit 114. The user profile information is generated based on at least one of the user's gender, age group, and location. In addition, the terminal control unit 118 uses touch information received from the position determination module 112c to recognize user behavior such as which product the user is touching, how long the user is touching it, and which product the user is more interested in, thereby analyzing the user's level of interest in products and touch patterns. The terminal control unit 118 selects advertising content in accordance with the touch information received from the position determination module 112c and the user profile information, and causes the selected advertising content to be displayed on the display unit 108. Through this process, the hypertargeting advertising platform device 100 provides the user with an interactive advertising experience that reflects the user's characteristics and touch position.

The hypertargeting advertising platform device 100 may further comprise a storage unit 122 configured to store advertising content for the products exhibited in the product display unit 110. When it is confirmed that advertising content corresponding to the user profile information is not present in the storage unit 122, the terminal control unit 118 requests and receives the advertising content from the service server 102 via the communication unit 116. At a preset time, the terminal control unit 118 connects to the service server 102 via the communication unit 116, receives advertising content for the products exhibited in the product display unit 110 in accordance with various user profiles, and stores the advertising content in advance in the storage unit 122, thereby enabling appropriate advertising content to be stably displayed on the display unit 108 without being adversely affected by the transmission speed of the network 106.

The terminal control unit 118 may cause Internet address information associated with the product corresponding to the user's touch position to be displayed on the display unit 108, for example, as a QR code. By capturing the QR code displayed on the display unit 108 with a smartphone, the user may access the service server 102 and provide user feedback information regarding the product corresponding to the touch position.

The terminal control unit 118 may adjust the touch sensing area formed by the touch recognition units 112a, 112b, 112c. By adjusting the touch sensing area to reflect the product display status in the product display unit 110, it is possible to prevent unsuitable advertising content from being displayed on the display unit 108.

As shown in FIG. 1, the service server 102 comprises a communication unit 124, a server control unit 126, and a storage unit 128.

The communication unit 124 is connected to the hypertargeting advertising platform device 100 and the user terminal 104 via the network 106.

The server control unit 126 manages the hypertargeting advertising platform device 100. The server control unit 126 may control advertising content to be displayed on the display unit 108 in accordance with the touch detection result from the hypertargeting advertising platform device 100.

The storage unit 128 stores advertising content to be provided to the hypertargeting advertising platform device 100, as well as user profile information, touch information, user feedback information, and the like received from the hypertargeting advertising platform device 100 or the user terminal 104.

The server control unit 126 may analyze advertising performance using the user profile information, touch information, and user feedback information. In addition, the server control unit 126 modifies or optimizes the advertising content to be provided to the hypertargeting advertising platform device 100 based on the analysis results.

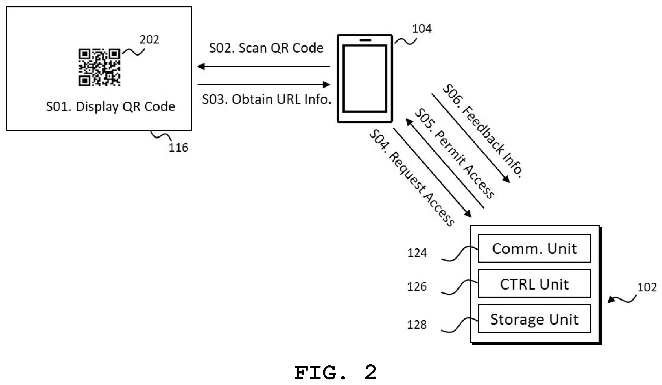

FIG. 2 is a diagram illustrating the flow of information for providing user feedback in the network configuration shown in FIG. 1.

The hypertargeting advertising platform device 100 causes a discount code or a promotional code to be displayed on the display unit 108, for example, as a QR code 202, in accordance with the collected user profile information, touch information (or product information), and the like (S01). The user captures the QR code displayed on the display unit 108 with his or her user terminal 104 (S02). As a result, the user terminal 104 acquires Internet address information enabling access to a website or application through which the user can provide feedback on the advertisement, together with user profile information, touch information (or product information), and the like (S03). The user terminal 104 requests access to the website or application of the service server 102 using the information obtained from the QR code (S04). The service server 102 confirms that the user is a legitimate user based on the information provided from the user terminal 104 and permits access by the user terminal 104 to the website or application (S05). Once access is permitted, the user terminal 104 provides user feedback information to the service server 102. The service server 102 may evaluate and modify the effectiveness of advertising by directly collecting information such as product purchases, user reactions, recognition, and preferences through the inflow of users to the website or application.

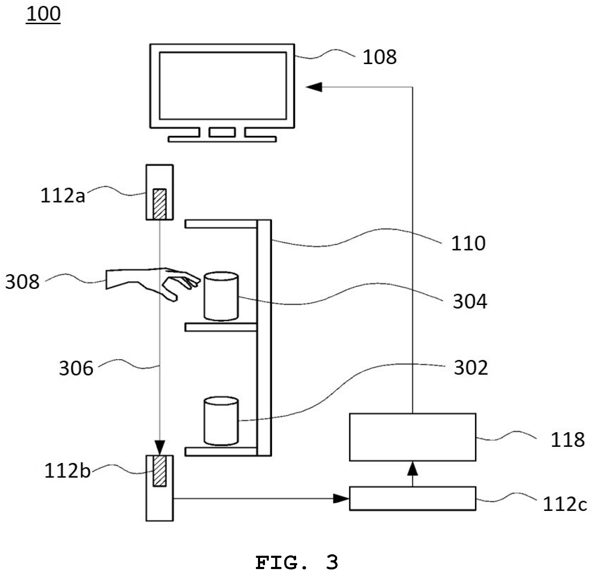

FIG. 3 is a diagram illustrating the operation of the hypertargeting advertising platform device 100 according to an embodiment of the present invention.

The display unit 108 may include a flat-panel display device such as an LCD panel or an OLED panel, a beam projector, or the like.

Various products 302, 304 may be exhibited in the product display unit 110, and a touch sensing area may be formed on the front face of the product display unit 110 by the touch measurement signal transmission module 112a and the touch measurement signal reception module 112b. When the touch measurement signal transmission module 112a transmits a touch measurement signal 306, the touch measurement signal reception module 112b detects the signal. For example, the touch measurement signal transmission module 112a may be configured as a device that emits infrared rays, and the touch measurement signal reception module 112b may be configured as a device that receives infrared rays.

In the present embodiment, the touch measurement signal transmission module 112a and the touch measurement signal reception module 112b are illustrated as being disposed facing each other in the vertical direction, but it is also possible to dispose them in the horizontal direction or on the same horizontal plane.

A plurality of touch sensing areas corresponding to the plurality of sections of the product display unit 110 may be set between the touch measurement signal transmission module 112a and the touch measurement signal reception module 112b.

When a user (consumer) attempts to grasp a product 304 disposed in the product display unit 110 with a hand 308, the touch measurement signal 306 is blocked by the hand, through which it is possible to determine which product the user attempted to grasp with the hand 308.

The touch measurement signal reception module 112b provides the received signal to the position determination module 112c, and the position determination module 112c computes the signal provided from the touch measurement signal reception module 112b to identify the position at which the touch measurement signal 306 was blocked, thereby detecting the touch position corresponding to the product 304 that the user's hand 308 has approached.

The position determination module 112c detects the touch position corresponding to the product 304 that the user's hand 308 has approached, and provides this information to the terminal control unit 118. The terminal control unit 118 identifies which product 304 the user is interested in based on the touch position, and causes an advertisement corresponding thereto to be displayed and exposed through the display unit 108.

In this way, the hypertargeting advertising platform device 100 can immediately identify the user's needs and provide accurate information to the user by delivering corresponding advertisements through the display unit 108, thereby increasing sales of the relevant products.

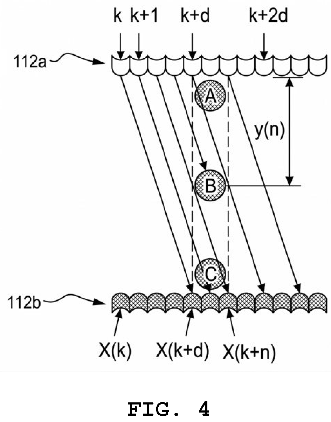

FIG. 4 illustrates a method of detecting X-axis coordinates and Y-axis coordinates in the touch recognition units 112a, 112b, 112c in order to sense the hand of the user.

Referring to FIG. 4, the touch measurement signal transmission module 112a and the touch measurement signal reception module 112b are disposed facing each other. In addition, it is also possible for the touch measurement signal transmission module 112a and the touch measurement signal reception module 112b to be formed on both sides in order to minimize disturbances due to external infrared signals such as sunlight.

The touch measurement signal transmission modules 112a are arranged along the X-axis direction at positions such as k, k+1, k+d, k+2d, and the touch measurement signal reception modules 112b may be arranged in the order of X(k), X(k+d), ..., X(k+n) along the X-axis direction. Here, d refers to the position of the touch measurement signal reception module 112b located at an oblique angle to which the infrared rays transmitted from the k-th touch measurement signal transmission module 112a reach, and is a factor that determines the magnitude of the oblique angle representing the inclination of the infrared rays transmitted from the touch measurement signal transmission module 112a.

A, B, and C shown in FIG. 4 are examples of touch areas, and the user may select and touch one of A, B, and C, or may perform a multi-touch simultaneously.

An object placed in the touch area blocks the touch measurement signal. That is, the object blocks the touch measurement signal output from the touch measurement signal transmission module 112a and input to the touch measurement signal reception module 112b.

For example, when a specific touch measurement signal transmission module 112a transmits a touch measurement signal, touch measurement signal reception modules 112b disposed at various positions such as acute, right, and obtuse angles relative to the touch measurement signal transmission module 112a are caused to operate while sequentially scanning, and also, while causing the touch measurement signal transmission modules 112a at various positions to operate, causing the touch measurement signal reception module 112b to receive the touch measurement signal, whereby the position determination module 112c can detect the X-axis coordinate of the object.

The process of detecting the Y-axis coordinate, such as y(n), is the same as the process of detecting the X-axis coordinate. The Y-axis coordinate can be detected by causing the touch measurement signal transmission modules 112a and the touch measurement signal reception modules 112b to operate sequentially and detecting the position at which the touch measurement signal is blocked and not received.

The embodiments of the present invention described above are merely illustrative, and those having ordinary skill in the art will appreciate that various modifications and equivalent other embodiments are possible therefrom. Therefore, it will be well understood that the present invention is not limited to the forms mentioned in the above detailed description. Accordingly, the true technical scope of protection of the present invention shall be determined by the technical concept of the appended claims. Furthermore, the present invention shall be understood to include all modifications, equivalents, and substitutes within the spirit and scope of the present invention as defined by the appended claims.

## Claims

1. A hypertargeting advertising platform device comprising:
a display unit on which advertising content is displayed;
a product display unit positioned adjacent to the display unit and having an area for exhibiting products;
a touch recognition unit disposed on a front face of the product display unit and configured to recognize a touch position of a user;
a communication unit configured to communicate with a server and receive the advertising content from the server; and
a terminal control unit configured to cause an advertisement for a product corresponding to a touch position detected by the touch recognition unit to be displayed on the display unit.

2. The hypertargeting advertising platform device of claim 1, wherein the touch recognition unit comprises:
a transmission module configured to transmit a touch measurement signal;
a reception module configured to receive the touch measurement signal transmitted from the transmission module; and
a position determination module configured to calculate the touch position of the user using the touch measurement signal received at the reception module.

3. The hypertargeting advertising platform device of claim 1, further comprising:
a location recognition unit configured to generate information regarding a location at which the hypertargeting advertising platform device is installed,
wherein the terminal control unit is configured to cause an advertisement for a product corresponding to the touch position to be selected in accordance with location information generated by the location recognition unit and to be displayed on the display unit.

4. The hypertargeting advertising platform device of claim 3, further comprising:
a storage unit configured to store advertising content for the products exhibited in the product display unit,
wherein the control unit requests the advertising content from the server via the communication unit when no advertising content corresponding to the touch position is stored in the storage unit.

5. The hypertargeting advertising platform device of claim 1, wherein the control unit causes Internet address information associated with a product corresponding to the touch position to be displayed on the display unit, so that user feedback information regarding the product corresponding to the touch position is provided to the server.

6. The hypertargeting advertising platform device of claim 5, wherein the Internet address information is displayed on the display unit as a QR code, and the user is able to provide user feedback information regarding the product corresponding to the touch position to the server by capturing the QR code with a smartphone.

7. The hypertargeting advertising platform device of claim 1, further comprising:
a storage unit configured to store advertising content for the products exhibited in the product display unit,
wherein the control unit receives the advertising content from the server via the communication unit at a preset time and stores the advertising content in the storage unit.
